# EUROPÄISCHE PATENTANMELDUNG

(11) **EP 2 025 491 A1**
(43) Veröffentlichungstag der Anmeldung: **18.02.2009**
(21) Anmeldenummer: 08012603.0
(22) Anmeldetag: 11.07.2008
(51) Int. Cl.: B29C 45/27

(54) **Heißkanalverteiler für scherempfindliche Kunstoffmassen oder Metalle**

(30) Priorität: 30.07.2007 AT 11922007
(71) Anmelder: ifw Manfred Otte GmbH, 4563 Micheldorf (AT)
(72) Erfinder: Otte, Roland, 4563 Micheldorf (AT)
(74) Vertreter: Landgraf, Elvira

(57) **Zusammenfassung**

Verteilersystem, für fließfähige, insbesondere hochviskose Formmassen, bestehend aus einem Verteilerbalken (1) und Verteilerkanälen (2), dadurch gekennzeichnet, dass die Übergänge (3) (Umlenkungsbereiche) im Verteilerbalken (1) zu den Verteilerkanälen (2) kontinuierlich mit großzügigen Radien ausgebildet sind.

## Beschreibung

Die Erfindung betrifft ein System zur Verteilung von plastifizierten Formmassen in einer Gussform, wie beispielsweise einer Spritzgussform oder Druckgussform.

Kunststoffformmassen oder Metalle sind in plastifiziertem Zustand, in dem sie in eine Gussform zur Herstellung eines Gusswerkstücks eingeleitet werden, oft besonders anfällig für Materialveränderungen, die durch Reibung, Temperatur und Scherkräfte hervorgerufen werden. Durch Reibung und Scherkräfte werden die Homogenität und die Eigenschaften der plastifizierten Masse verändert, die im anschließenden Gießvorgang hergestellten Werkstücke und Formen weisen daher nicht immer optimale Qualität auf.
Dabei wird die Formmasse durch Cracken, Verbrennungen, gegebenenfalls Freisetzen von Spaltprodukten, wie z.B. von Cl₂ und dergleichen verändert.

Ein weiteres Problem ist, dass sich bei Zuführung von plastifiziertem Material in die Angussbuchse bzw. im Verteilerkanal an den Umlenkstellen leicht Ablagerungen bilden, die durch Temperaturunterschiede im Werkzeug oder im Materialstrom verursacht werden. An den Kanten des Verteilers bilden sich Scherkräfte, dadurch entstehen auch Temperaturunterschiede im Materialstrom. Auch diese Temperaturunterschiede können zum Cracken führen.

Daher wurden scherempfindliche Kunststoffmassen bisher durch komplizierte und lange Kaltkanalverteiler dem Formnest zugeführt.

Aufgabe der Erfindung war es daher ein Verteilersystem insbesondere für fließfähige Formmassen zur Verteilung von Gussausgangsmaterial in der Gussform bereitzustellen, das eine Veränderung des Materials insbesondere durch Reibung und Scherkräfte verhindert, das eine kompakte Bauweise aufweist und eine relativ einfache Reinigung der Verteilerbohrungen erlaubt.

Gegenstand der Erfindung ist daher ein Verteilersystem, für fließfähige, insbesondere hochviskose Formmassen, bestehend aus einem Verteilerbalken und Verteilerkanälen, dadurch gekennzeichnet, dass die Übergänge im Verteilerbalken zu den Verteilerkanälen kontinuierlich mit großzügigen Radien ausgebildet sind.

Beispiele für fließfähige Formmassen sind beispielsweise Kunststoffformmassen aus PVC, , PP, PVDF, PE, PET, ABS, PPS, POM, PPSV, PC, Blends, gefüllte Werkstoffebeispielsweise glasfasergefüllte Kunststoffe, oder Metalle wie Mg.

Durch die kontinuierlichen Übergänge mit großzügigen Radien wird eine Beschädigung der fließenden Formmassen durch die an Kanten und rechtwinkeligen Umleitungen des fließenden Materialstroms auftretender Scherkräfte verhindert.

Dadurch wird das Spritzgussformstück, das im Anschluss hergestellt wird, beständiger und haltbarer und weist eine höhere Homogenität und Qualität auf. Bei gefüllten Werkstoffen, beispielsweise bei glasfasergefüllten Werkstoffen, bleiben überdies die Faserlänge und die Orientierung der Fasern erhalten.

Die Umlenkungsbereiche können aus dem gleichen oder einem unterschiedlichen Material ausgeführt sein, wie die anderen Teile des Verteilerkanals.

Dabei kommen unterschiedliche Materialsorten, beispielsweise aus Cr/Ni-Stahl 1.2312, 1.2316, 1.2738, 1.2343, 1.4541, 1.4571, aus Legierungen, beispielsweise aus Bronzen oder Al-Legierungen, Mg-Legierungen, Leichtmetall-Legierungen, aus hochbeständigen Keramiken, aus Grauguss, Stahlguss oder Schwarzguss, geschäumte oder gesinterte Materialien und dergleichen in Frage.

Es ist auch möglich in den Umlenkbereichen eine Beschichtung aufzubringen, wobei als Beschichtungen beispielsweise TiN, TiAlN, TiCN, CrN, AlCrN, polykristalliner Diamant, Ni, Cr, CrCN und dergleichen in Frage kommen, wobei vorzugsweise Materialkombinationen zum Einsatz kommen können.

Weiters kann als Oberflächenbeschichtung eine Metallmatrix oder eine keramische Zusammensetzung aufgebracht sein, wobei in die Matrix beispielsweise Teflon oder Gleitmittel oder Schmiermittel oder weichere oder härtere Metalle als das Matrixmaterial eingelagert sein können.

Ferner kann der Umlenkbereich auch durch gefüllte Materialien oder durch härtere Materialien ausgekleidet sein, wobei diese Auskleidungen im Bedarfsfall ausgewechselt werden können.

In einer Ausführungsform kann der Verteilerkanal zerlegbar ausgeführt sein, um eine Reinigung zu erleichtern.

Vorzugsweise sind die Radien der Umlenkstellen so definiert, dass sie einen Wert von 1 -10 D, vorzugsweise 1 - 5 D erreichen.

In einer bevorzugten Ausführungsform werden zusätzliche Vorrichtungen zur Sicherstellung einer gleichmäßigen Temperaturverteilung vorgesehen.
So können im Heißkanalverteiler seitliche Wärmeverteilerbalken vorgesehen werden, in die Heizpatronen eingebracht sind. Diese sind aus einem Material mit guter Wärmeleitfähigkeit gefertigt.
Der mittlere Teil des Verteilerbalkens ist aus hochwertigem Stahl gefertigt um die mechanischen Belastungen des Heißverteilerkanals aufnehmen zu können.

In einer weiteren Ausführungsform können an der Ober- und/oder Unterseite Wärmeverteilerplatten vorgesehen werden. Als Heizquellen dienen Rohrheizkörper, die Platten oben und unten dienen zur gleichmäßigen Wärmeverteilung und sind aus bekanntem gut wärmeleitenden Material gefertigt.

Der erfindungsgemäße Heißkanalverteiler ist besonders geeignet für sensible scherempfindliche Formmassen, wie Hart- oder Weich PVC, Polyolefine, wie Polypropylene oder Polyethylene, PVDF oder Metalle, wie Mg.

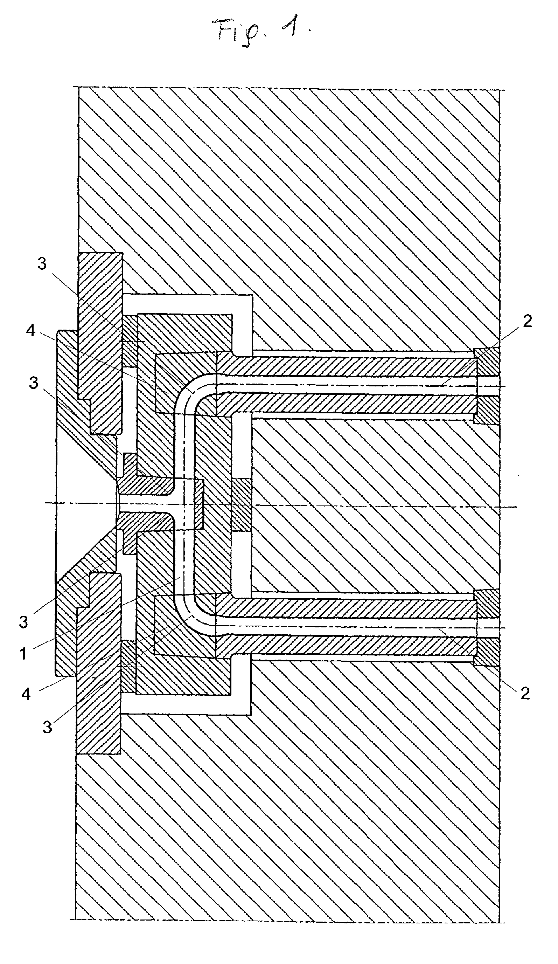

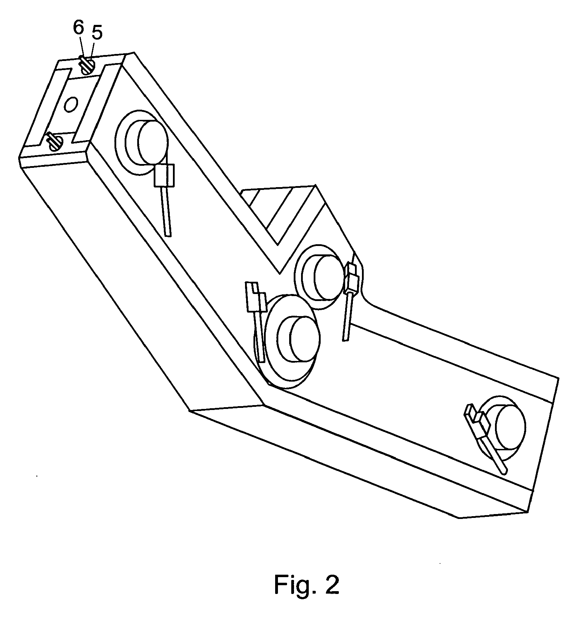

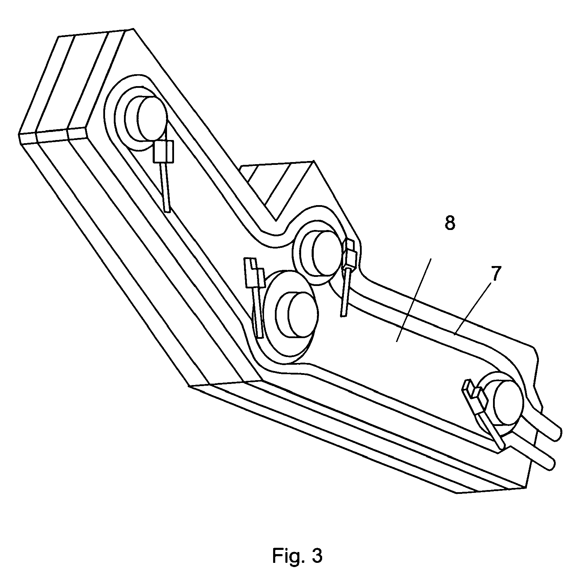

In den Fig. 1 bis 3 sind erfindungsgemäße Verteilersysteme dargestellt.

Darin bedeuten 1 den Verteilerbalken, 2 die Verteilerkanäle, 3 die Übergänge von Verteilerbalken zu Verteilerkanälen, 4 eine Buchse, die vorzugsweise zerlegbar ausgeführt ist, 5 die seitlichen Wärmeverteilerbalken, 6 die Heizpatronen, 7 die Rohrheizkörper, 8 die Wärmeverteilerplatte.

## Patentansprüche

1. Verteilersystem, für fließfähige, insbesondere hochviskose Formmassen, bestehend aus einem Verteilerbalken und Verteilerkanälen, **dadurch gekennzeichnet, dass** die Übergänge (Umlenkungsbereiche) im Verteilerbalken zu den Verteilerkanälen kontinuierlich mit großzügigen Radien ausgebildet sind.

2. Verteilersystem nach Anspruch 1, **dadurch gekennzeichnet, dass** die Umlenkungsbereiche aus dem gleichen Material wie oder einem anderen Material als die anderen Teile des Verteilersystems hergestellt sind.

3. Verteilersystem nach einem der Ansprüche 1 bis 2, **dadurch gekennzeichnet, dass** die Oberfläche in den Umlenkbereichen beschichtet ist.

4. Verteilersystem nach einem der Ansprüche 1 bis 2, **dadurch gekennzeichnet, dass** die Umlenkbereiche ausgekleidet sind.

5. Verteilersystem nach einem der Ansprüche 1 bis 4, **dadurch gekennzeichnet, dass** die Radien in den Umlenkbereichen so bemessen sind, dass sie 1 - 10 D aufweisen.

6. Verteilersystem nach einem der Ansprüche 1 bis 5, **dadurch gekennzeichnet, dass** das Verteilersystem zerlegbar ausgeführt ist.

7. Verteilersystem nach einem der Ansprüche 1 bis 6, **dadurch gekennzeichnet, dass** zur gleichmäßigen Wärmeverteilung seitliche Wärmeverteilerbalken mit Heizpatronen als Wärmequelle oder oben und unten Wärmeverteilerplatten mit Rohrheizkörpern als Wärmequelle vorgesehen sind.

8. Verwendung des Verteilersystems nach einem der Ansprüche 1 bis 7 zur Verteilung und Zuführung von fließfähigen scherempfindlichen Formmassen in einer Gussmaschine wie einer Spritzgussmaschine oder einer Druckgussmaschine.
